Europäisches Patentamt

European Patent Office

Office européen des brevets

(11) Publication number: **0 407 007 A2**

# EUROPEAN PATENT APPLICATION

(21) Application number: 90304538.3

(22) Date of filing: 26.04.90

(51) Int. Cl.⁵: **G06F 15/52**, G21C 17/00, G05B 17/00, G01N 25/20, G06F 15/42

The title of the invention has been amended (Guidelines for Examination in the EPO, A-III, 7.3).

(30) Priority: 19.06.89 US 358490

(43) Date of publication of application:
09.01.91 Bulletin 91/02

(84) Designated Contracting States:
BE DE ES FR IT

(71) Applicant: **WESTINGHOUSE ELECTRIC CORPORATION**
**Westinghouse Building Gateway Center**
**Pittsburgh Pennsylvania 15222(US)**

(72) Inventor: **Grimm, Noel Phillip**
**1350 Hillsdale Drive**
**Monroeville, PA 15146(US)**
Inventor: **Kothmann, Richard Edward**
**866 Stevendale Drive**
**Pittsburgh, PA 15221(US)**

(74) Representative: **van Berlyn, Ronald Gilbert**
**23, Centre Heights**
**London, NW3 6JG(GB)**

(54) **System for modelling thermal properties of reactor vessels.**

(57) A method and system for determining the temperature response of a body to input power supplied to a plurality of heater units (8) disposed for heating the body (2), utilizing apparatus composed of computer means (40-46) having a manual data input device (44), a first memory unit for storing data representative of the thermal characteristics which determine the relation between the input power supplied to each heater unit (8) and the resulting temperature of the body (2), a calculation device connected for calculating the temperature of the body (2) during successive time steps on the basis of heater input power data supplied via the manual data input device (44) and the stored data, and display and recording devices (42,46) connected for displaying and recording the heater input power data and calculated temperature of the body (2) during each time step. The method is carried out by: supplying (26), via the manual data input device (44), selected heater input values at the start of each time step; operating (30) the calculation device for calculating, during each time step, the temperature of the body (2) in accordance with the temperature calculated during the previous time step and the heater input values supplied during the present time step; and operating (34) the display and recording devices for displaying and recording the temperature calculated during each time step.

FIG. 5

## THERMAL SIMULATION PROCESS

This invention was made under United States government contract and the Federal Government may have rights in the subject invention.

CROSS REFERENCE TO RELATED APPLICATIONS

The following applications disclose subject matter which is related to the present invention. They are identified by title and U.S. Serial Number. They were all filed in the U.S. on June 19, 1989.

MODULAR ANNEALING APPARATUS FOR IN SITU REACTOR VESSEL ANNEALING AND RELATED METHOD OF ASSEMBLY - Serial No. 368,454

WATER FILLED TANKS FOR TEMPORARY SHIELDING OF REACTOR VESSEL INTERNALS AND METHOD OF ASSEMBLY - Serial No. 368,133

COFFER DAM FOR TEMPORARY SHIELDING OF REACTOR VESSEL INTERNALS AND METHOD OF ASSEMBLY - Serial No. 368,635

REACTOR VESSEL ANNEALING SYSTEM - 368,456

ANNEALING UNIT INSERTION AND REMOVAL SYSTEM-Serial No. 368,503

HEATING EQUIPMENT INSTALLATION SYSTEM AND METHOD - Serial No. 368,495

TEMPERATURE MONITORING DEVICE AND THERMOCOUPLE ASSEMBLY THEREFOR - Serial No. 368,459

ELECTRIC RESISTANCE HEATER UNIT ASSEMBLY -Serial No. 368,432

REACTOR VESSEL NOZZLE THERMAL BARRIER - Serial No. 368,738

MONITORING AND CONTROL OF REACTOR VESSEL HEAT TREATMENT - Serial No. 368,453

HEAT TREATMENT CONTROL - Serial No. 368,457

The present invention relates to a thermal simulation procedure employed in the development of a reactor vessel annealing treatment.

It is known that the pressure vessels of nuclear reactors experience a phenomenon known as embrittlement due to their exposure to neutron radiation and that the adverse effects of this phenomenon can be reversed by subjecting the pressure vessel to an annealing treatment. Since it is impractical to remove such a pressure vessel for transport to an annealing facility, it has been proposed to transport annealing equipment to the reactor site.

Certain proposed annealing equipment includes a heater unit assembly which has the general configuration and size of the interior of the reactor pressure vessel and is provided with an array of heater units disposed to effect uniform heating of the pressure vessel.

In performing such an annealing treatment, the vessel wall must be heated to defined temperatures, must be precisely maintained at each defined temperature for a predetermined period of time, and must undergo temperature changes at a controlled rate. Because of the size of a reactor vessel, and in view of the relatively high temperatures employed for such an annealing treatment, heating of the vessel wall involves a number of variables and uncertainties which must be taken into account when making heater power adjustments. In particular, there are inherent delays between any change in heater power and the resulting change in the temperature of the vessel wall and the heat produced by any one heater can influence the vessel in a manner which is not completely predictable.

In view of these difficulties, the control of such an annealing treatment must be aided by a computerized system which provides the operator with information as to the changes which should be made in heater operating power, taking account of the inherent delays between changes in heater power and corresponding changes in the temperature of the body being treated.

Since the capability must be provided for carrying out such an annealing treatment on a variety of pressure vessels, each having different thermal characteristics, preparations for treating a given vessel would be materially aided by advance knowledge of at least the approximate response of a given vessel to changes in heater power.

It is a primary object of the present invention to provide a procedure and system for providing an indication of the thermal response of a given vessel to a given heating system.

The above and other objects are achieved, according to the present invention, by a method for determining the temperature response of a body to input power supplied to a plurality of heater units disposed for heating the body, utilizing apparatus composed of computer means having a manual data input device, a first memory unit for storing data representative of the thermal characteristics which determine the relation between the input power supplied to each heater unit and the resulting temperature of the body, calculation means connected for calculating the temperature of the body during successive time steps on the basis of heater input power data supplied via the manual data input device and the stored data, and display and recording means connected for displaying and recording the heater input power data and calculated temperature of the body during each time step, comprising the steps of: supplying, with the aid of the manual data input device, selected heater input values at the start of each time step; operating the calculation means for calculating, during each time step, the temperature of the body in accordance with the temperature calculated during the previous time step and the heater input values supplied during the present time step; and operating the display and recording means for displaying and recording the temperature calculated during each time step.

The objects according to the invention are further achieved by the provision of a simulator for determining the temperature response of a body to input power supplied to a plurality of heater units disposed for heating the body, comprising computer means having a manual data input device for inputting selected heater input values at the start of each one of a plurality of successive time steps, a first memory unit for storing data representative of the thermal characteristics which determine the relation between the input power supplied to each heater unit and the resulting temperature of the body, calculation means connected for calculating the temperature of the body during successive time steps on the basis of the temperature calculated during the previous time step and the heater input values supplied during the present time step, and display and recording means connected for displaying and recording the heater input power data and calculated temperature of the body during each time step.

The invention can serve a variety of purposes. It can be employed, for example, in the development of a heat treatment control, such as the control described in the above-cited U.S. application bearing Serial No. 368,457 and can subsequently be used to test such a control. In the latter case, a control program would be combined with a program prepared according to the invention so that input power settings provided during running of the control program are supplied to the program based on the present invention and the temperatures calculated by the latter program would be supplied to the control program in place of actual temperature readings. Such a combination could also be used to advantage to train operators before they are called upon to control an actual thermal treatment.

Figure 1 is a cross-sectional, detail view of a reactor vessel associated with an annealing system.

Figure 2 is a diagram of a thermal model of one component zone of the structure shows in Figure 1.

Figure 3 is a pictorial view of a plurality of vessel wall zones, provided to illustrate the thermal coupling between adjacent zones.

Figure 4 is a flow diagram illustrating the performance of the procedure according to the present invention.

Figure 5 is a pictorial view oi, one embodiment of a device for implementing the invention.

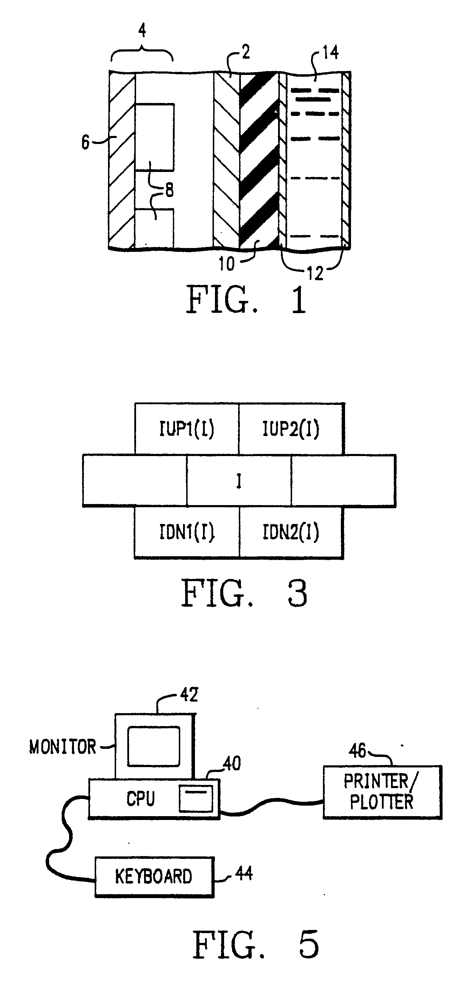

Figure 1 shows a portion of the wall 2 of a reactor vessel into which a heater unit assembly 4 has been introduced. Assembly 4 is composed basically of a supporting shell 6 having the form of a hollow cylinder and a plurality of heater units 8 supported by, and distributed over the outer surface of, shell 6. Each heater unit 8 is located within a heating zone which delimits an associated region of wall 2 and shell 6. Wall 2 is enclosed by a layer of insulation 10 that is, in turn, surrounded by a shield tank 12 containing a body of water 14. Such a reactor vessel will include a plurality of passages, or nozzles, for the passage of water into and out of the vessel. These nozzles are sources of heat loss which should be taken into account when establishing a treatment procedure.

In other known installations, a concrete or metal enclosure surrounds vessel wall 2 and insulation 10, being separated from insulation 10 by an air gap, the enclosure and air gap being provided in place of tank 12 and water body 14. It is to be understood that the invention can readily be implemented to provide a model of such other installations.

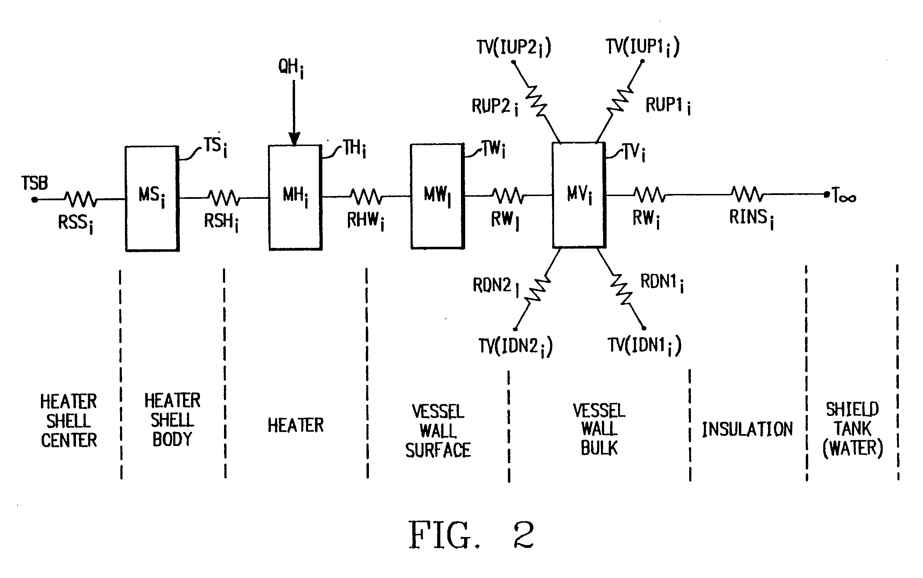

Figure 2 is a schematic diagram of a thermal model of one heater zone i, where i is an integer designating the selected zone and each zone contains one heater unit. Thus, if there are a total of N zones, i will have a value of between 1 and N. The heater shell 6, which supports the heater units 8, is considered to be divided into a plurality of zones, each associated with one heater unit 8, as is the vessel wall 2. For each zone, i, the heater shell 6 has a thermal mass $MS_i$, the heater unit 8 has a thermal mass $MH_i$ and the vessel wall 2 is divided into two portions, an interior surface layer which represents approximately 1/3 of the total mass of the vessel wall and has a thermal mass $MW_i$, and the remainder of the vessel wall which has a thermal mass $MV_i$. The temperatures of thermal masses $MS_i$, $MH_i$, $MW_i$ and $MV_i$ are $TS_i$, $TH_i$, $TW_i$ and $TV_i$, respectively.

The center of the heater shell 6 is coupled to the shell body by a thermal resistance $RSS_i$ and the

temperature within the shell, or the mean shell temperature, TSB, is assumed to be

$$\frac{1}{N}\sum_{i=1}^{N} TS_i.$$

Thermal masses $MS_i$ and $MH_i$ are coupled by thermal resistance $RSH_i$, masses $MH_i$ and $MW_i$ by thermal resistance $RHW_i$ and masses $MW_i$ and $MV_i$ by thermal resistance $RW_i$. The vessel 2 is surrounded by a layer of insulation 10, represented by thermal resistance $RINS_i$, and is thermally coupled thereto by a thermal resistance which is also equal to $RW_i$. The body of water 14 assumed to be at a constant temperature, $T\infty$.

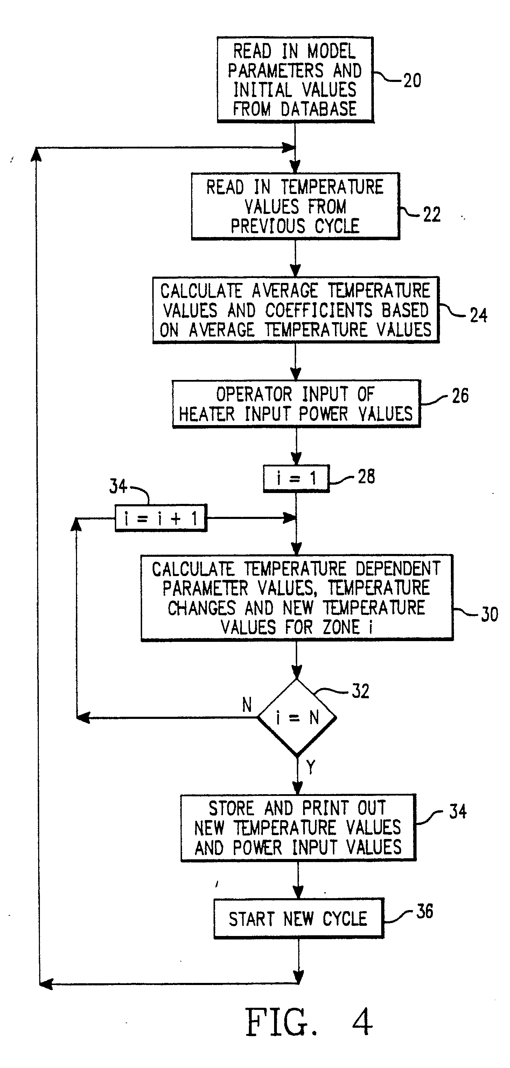

Account is taken of the thermal coupling between vessel zone i and the vessel zones immediately above and below it, the zones of interest being coupled by thermal resistances $RUP1_i$, $RUP2_i$, $RDN_i$ and $RDN2_i$, which will be explained with reference to Figure 3, which shows the spatial relation between a representative group of vessel wall zones.

With respect to a selected zone I of the vessel wall, a first zone therebelow is designated IDN1(I) and a second zone therebelow is IDN2(I). Correspondingly, the two zones thereabove are IUP1(I) and IUP2(I). The thermal resistances, RUP and RDN, between any two zones which are thermally coupled are considered to be identical.

Thus, if, in Figure 3, zone IDN1(I) is designated as zone J, then zone I is also IUP2(J), and RDN1(I) = RUP2(J). Since J = IDN1(I), then RDN1(I) = RUP2 (IDN1(I)). The meaning of the last equality is that the resistance to heat flow down from zone I to zone IDN1(I) is equal to the resistance to heat flow up from zone IDN1(I) = zone J to zone IUP2(J) = zone I. Thus, by calculating RUP2(J), one can obtain RDN1(I).

The model could also take account of thermal resistances between horizontally adjacent zones, but it does not appear that this would significantly affect the accuracy of the model.

Further, refinements could be made by including thermal resistances between each heater thermal mass $MH_i$ and the vessel wall surfaces MW immediately above and below zone i.

Prior to activation of the model, values for several parameters, which will be fixed during simulation, are calculated and introduced into a data base. These parameters are:

for each zone, i:

$AZ_i$ = Area of inside wall surface of vessel zone;

$BV_i$ = Mean wall thickness of vessel zone, based on volume of vessel zone divided by $AZ_i$;

$RVO_i$ = outside radius of vessel zone at normal room temperature;

$LZ_i$ = axial length of vessel zone;

$B1_i$ = thickness of insulation 10 at location of vessel zone at normal room temperature;

$AH_i$ = area of surface of associated heater 8 which faces wall 2;

$ASH_i$ = area of surface of associated zone of shell 6 which faces wall 2;

$MH_i$ = Thermal mass of associated heater 8,

= volume of heater times density of heater times specific heat of heater; and

$MS_i$ = thermal mass of associated shell zone, calculated in the same manner as $MH_i$; and

$FNZ_i$ = a weighing factor representative of heat loss through any nozzle in proximity to the associated zone, and

for the entire structure:

SIG = Stefan-Boltzmann radiation constant;

EMVW = emissivity of vessel wall;

EMAV = emissivity of heaters toward vessel;

EMHS = emissivity of heaters toward shell;

EMSH = emissivity of shell toward heaters;

EMSS = emissivity of shell toward shell interior; and

DH∅ = Density of vessel wall.

In addition, initial values are provided for $TS_i$, $TH_i$, $TW_i$, $TV_i$ and $T\infty$, based on the temperatures which are assumed to exist prior to the start of the heat treatment.

Then, in a first step of the procedure, values are derived for the average temperature, TVB, of the vessel wall, and the average temperature, TSB, of the shell, according to the following equations:

$$TVB = \frac{1}{N} \sum_{i=1}^{N} (TV_i) \qquad (1)$$

$$TSB = \frac{1}{N} \sum_{i=1}^{N} (TS_i) \qquad (2)$$

In a second step, the following temperature dependent coefficients are derived, where T = TVB.

$$ALFAV(T) = [11.9 + 0.00387T + 6.43 \times 10^{-7}T^2] \cdot 10^{-6}/°C \qquad (3)$$

$$KV(T) = [448 - 0.109 - 0.000211T^2] \frac{gm.\ cal.}{hr.\ cm.\ °C} \qquad (4)$$

$$CPV(T) = 0.115 + 1.12 \times 10^{-5}T + 1.72 \times 10^{-7}T^2 \frac{gm.\ cal.}{gm.\ °C} \qquad (5)$$

During each operating cycle for the entire system, the same values for these coefficients will be used for all zones.

Then, the individual, or operator, controlling the simulation process, inputs values for the power input, $QHI_i$, for the heater of each zone and, in a series of steps to be described below, resultant temperature values are derived.

In the first step of this series, temperature dependent values are derived as follows:

$$KI(TV_i) = [0.206 + 0.000558\ (TV_i+T_\infty) + 3.34 \times 10^{-15}$$

$$(TV_i{}^6 - T_\infty{}^6)/(TV_i - T_\infty)]\ \frac{gm.\ cal.}{hr.\ cm.\ °C} \qquad (6)$$

$$RUP1(i) = \frac{1}{KV(T)} \left[ \frac{(LZ(i))^2}{AZ(i)\ \cdot\ BV(i)} \right.$$

$$\left. + \frac{(LZ(j))^2}{AZ(j)\ \cdot\ BV(j)} \right]$$

where j = IUP1(i); $\qquad (7)$

$$RUP2(i) = \frac{1}{KV(T)} \left[ \frac{(LZ(i))^2}{AZ(i)\ \cdot\ BV(i)} \right.$$

$$\left. + \frac{(LZ(j))^2}{AZ(j)\ \cdot\ BV(j)} \right],$$

where j = IUP2(i); $\qquad (8)$

Values for RDN1(i) and RDN2(i) are obtained from calculated RUP values of adjacent zones, as described earlier herein.

6

$$NF1_i = 4 \cdot SIG \cdot \left( \frac{TW_i + TH_i}{2} + K1 \right)^3 ,$$

where K1 is a calculated constant; (8)

$$NF2_i = 4 \cdot SIG \cdot \left( \frac{TH_i + TS_i}{2} + K1 \right)^3 \qquad (9)$$

$$NF3_i = 4 \cdot SIG \cdot \left( \frac{TSB + TH_i}{2} + K1 \right)^3 , \qquad (10)$$

$$RW_i = \frac{0.5 \cdot BV_i}{AZ_i \cdot KV(T)} \qquad (11)$$

$BIV_i = BI_i - RVO_i \cdot ALFAV(T \cdot (TV_i - T_k),$
where $T_k$ is a selected temperature that may equal normal room temperature, i.e., $20^\circ$ C (12)

$$RAM_i = RW_i + RINS_i = RW_i + \frac{BIV}{AZ_i} \cdot KI(TV_i) \qquad (13)$$

$$RHW_i = \left[ \left( \frac{1}{EMVW} - 1 \right)/AZ_i \right.$$

$$\left. + \frac{1}{AH_i \cdot EMHV} \right] \cdot \frac{1}{NF1_i} \qquad (14)$$

$$RSH_i = \left[ \frac{1}{ASH_i \cdot EMSH} + \left( \frac{1}{EMHS} - 1 \right)/ASH_i \right]$$

$$\cdot \frac{1}{NF2_i} \qquad (15)$$

$$RSS_i = \frac{1}{ASH_i \cdot EMSS \cdot NF3_i} \qquad (16)$$

$MV_i = \frac{2}{3} \cdot AZ_i \cdot BV_i \cdot DH\emptyset \cdot CPV(TV_i)$ (17)
$MW_i - 0.5 . MV_i$ (18)

Then in a second step of this series, resultant temperature changes with time are calculated as follows:

$$\delta TS_i(t) = \frac{1}{MS_i} \left[ \frac{TH_i(t_p)}{RSH_i(t_p)} + \frac{TSB(t_p)}{RSS_i(t_p)} \right.$$

$$\left. - \left( \frac{1}{RSH_i(t_p)} + \frac{1}{RSS_i(t_p)} \right) TS_i(t_p) \right] \cdot \delta t$$

where $\delta t$ is the time interval between calculations, i.e., the calculation cycle period, and
the terms designated by $t_p$ are the values obtained in the immediately preceding calculation cycle period;

$$\delta TH_i(t) = \frac{1}{MH_i(t_p)} \left[ \frac{TW_i(t_p)}{RHW_i(t_p)} + \frac{TS_i(t_p)}{RSH_i(t_p)} + QHI_i(\delta t) \right.$$

$$\left. - \left( \frac{1}{RHW_i(t_p)} + \frac{1}{RSH_i(t_p)} \right) TH_i(t_p) \right] \cdot \delta t$$

where $QH_i(\delta t)$ is the electrical power input to heater i during the present interval $\delta t$;

$$\delta TW_i(t) = \frac{1}{MW_i(t_p)} \left[ \frac{TH_i(t_p)}{RAW_i(t_p)} + \frac{TV_i(t_p)}{RW_i(t_p)} \right.$$

$$\left. - \left( \frac{1}{RHW_i(t_p)} + \frac{1}{RW_i(t_p)} \right) TW_i(t_p) \right] \cdot \delta t$$

$$\delta TV_i(t) = \frac{1}{MV_i(t_p)} \left[ \frac{TW_i(t_p)}{RW_i(t_p)} + \frac{T\infty}{RAM_i(t_p)} \right.$$

$$+ \left( \frac{TV(IUP1_i)(t_p)}{RUP1_i} + \frac{TV(IUP2_i)(t_p)}{RUP2_i} \right)$$

$$+ \left( \frac{TV(IDN1_i)(t_p)}{RDN1_i} + \frac{TV(IDN2_i)(t_p)}{RDN2_i} \right)$$

$$- \left( \frac{1}{RW_i(t_p)} + \frac{1}{RAM_i(t_p)} + \frac{1}{RUP1_i} + \frac{1}{RUP2_i} \right.$$

$$\left. + \frac{1}{RDN1_i} + \frac{1}{RDN2_i} \right) TV_i(t_p) \right] \cdot \delta t$$

$$+ FNZ_i (T\infty - TV_i)$$

New temperature values are then calculated by adding these $\delta T$ values to the previous temperature values.

Figure 4 is a flow diagram illustrating the performance of the above-described procedure.

In a first function block 20, fixed parameters for the simulation model and initial coefficient and temperature values are read in from the data base. Then, temperature values from the previous cycle are read in at function block 22. At the start of operation, these temperature values are the initial values provided by function block 20. Thereafter, the average temperature values and the coefficients based on average temperature values are calculated in function block 24. Then, in function block 26, the operator is given the opportunity to supply selected heater input power values for all zones.

Then, for performing calculations for the first heater zone, i is said equal to 1 in function block 28 and, in function block 30, all temperature dependent parameter values, temperature changes and new temperature values for the selected zone are calculated.

Then, in decision block 32, a determination is made of whether i is equal to N. If this is not the case, the value of i is incremented by 1 in function block 34 and the calculations of function block 30 are repeated for the new zone. When i is equal to N, the new temperature values and the power input values for the cycle are stored and printed out in function block 34. This printout can include plotting of the temperature variation from one cycle to the next in each zone.

Then, a new cycle is started in function block 36 and operation returns to function block 22.

The relation between the time scale a simulation procedure according to the present invention and real time is determined by the duration of the calculation cycle period, $\delta t$. The time delays which exist between a change in heater power and a change in the resulting temperatures is represented, in the temperature change equations presented above, by the terms $MS_i$, $MH_i$, $MW_i$ and $MV_i$.

The procedure according to the present invention thus permits a determination to be made of at least the approximate relationship which will exist between various heater power levels and changes in the vessel wall temperature before an annealing treatment is performed in practice. The values derived from this procedure can then be employed to configure the heater control procedure which will be employed in practice to enable that procedure to provide accurate recommendations for heater power changes as the heat treatment proceeds.

The entire procedure is preferably implemented by suitably programming a digital computer so as to provide prompts which instruct the operator to key in heater power input values at appropriate times. The programming would be configured to display to the operator the previous power input values and the resulting vessel zone temperature values, as well as other temperature values, as desired. All the resulting temperature values can be printed out in numeric form and/or plotted.

A suitable system for performing the procedure according to the present invention is illustrated in Figure 5 and includes a general purpose digital computer composed of a CPU 40 containing memories and calculation devices, together with a monitor 42, a keyboard 44 connected to CPU 40 via a cable and a printer and/or plotter 46 which is also connected to CPU 40 via a cable. During performance of a procedure according to the invention, desired heater input power settings are input via keyboard 44 and the resulting temperature readings, as well as current power input settings, are displayed on monitor 42. This information is additionally printed out and/or plotted in device 46.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

| IDENTIFICATION OF REFERENCE NUMERALS USED IN THE DRAWINGS | | |
|---|---|---|
| LEGEND | REF. NO. | FIGURE |
| READ IN MODEL PARAMETERS AND INITIAL VALUES FROM DATABASE | 20 | 4 |
| READ IN TEMPERATURE VALUES FROM PREVIOUS CYCLE | 22 | 4 |
| CALCULATE AVERAGE TEMPERATURE VALUES AND COEFFICIENTS BASED ON AVERAGE TEMPERATURE VALUES | 24 | 4 |
| OPERATOR INPUT OF HEATER INPUT POWER VALUES | 26 | 4 |
| i = 1 | 28 | 4 |
| CALCULATE TEMPERATURE DEPENDENT PARAMETER VALUES, TEMPERATURE CHANGES AND NEW TEMPERATURE VALUES FOR ZONE i | 30 | 4 |
| i = n | 32 | 4 |
| STORE AND PRINT OUT NEW TEMPERATURE VALUES AND POWER INPUT VALUES | 34 | 4 |
| i = i + 1 | 34 | 4 |
| START NEW CYCLE | 36 | 4 |
| CPU | 40 | 5 |
| MONITOR | 42 | 5 |
| KEYBOARD | 44 | 5 |
| PRINTER/PLOTTER | 46 | 5 |

**Claims**

1. A method for determining the temperature response of a body to input power supplied to a plurality of heater units (8) disposed for heating the body (2), utilizing apparatus composed of computer means (40-46) having a manual data input device (44), a first memory unit for storing data representative of the thermal characteristics which determine the relation between the input power supplied to each heater unit (8) and the resulting temperature of the body (2), calculation means connected for calculating the temperature of the body (2) during successive time steps on the basis of heater input power data supplied via the manual data input device (44) and the stored data, and display and recording means (42,46) connected for displaying and recording the heater input power data and calculated temperature of the body (2) during each time step, characterized in that it comprises the steps of:

supplying (26), with the aid of the manual data input device (44), a selected heater input value at the start of each time step;

operating (30) said calculation means for calculating, during each time step, the temperature of the body (2) in accordance with the temperature calculated during the previous time step and the heater input values supplied during the present time step; and

operating (34) said display and recording means for displaying and recording the temperature calculated during each time step.

2. A method as defined in claim 1 characterized in that each heater unit (8) is associated with a respective zone of the body (2) and said step of operating (30) said calculation means is carried out to calculate the temperature of each zone of the body (2) in accordance with the heater input value supplied during the present time step for the respective heater unit (8).

3. A method as defined in claim 2 characterized in that said step of operating said calculation means is carried out for calculating the temperature of each body (2) zone as a function of the flow of heat between each body (2) zone and body (2) zones adjacent thereto.

4. A method as defined in claim 2 characterized in that said step of operating said calculation means is carried out for calculating the temperature of each body (2) zone as a function of the delay between a change in the input power supplied to a heater unit and the resulting change in the temperature of the associated body (2) zone.

5. A method as defined in claim 2 characterized in that said step of operating said calculation means is carried out to successively calculate the temperature of each body (2) zone in turn.

6. A method as defined in claim 1 characterized in that the body (2) is a reactor pressure vessel and said step of operating said calculation means is carried out for calculating the temperature of a surface layer at the interior of the vessel and the temperature of the portion of the vessel which is radially outside of the surface layer.

7. A method as defined in claim 6 characterized in that the vessel (2) is surrounded by a body of water (14) and a layer of insulation (10) between the body of water (14) and the vessel (2), and said step of operating the calculation means is carried out for calculating the temperature of the vessel (2) as a function of the transfer of heat from the vessel (2) to the body of water (14).

8. A method as defined in claim 7 characterized in that said step of operating said calculation means is carried out for calculating the temperature of the vessel (2) as a function of compression which would be experienced by the layer of insulation (10) as a result of thermal expansion of the vessel (2).

9. A method as defined in claim 1 characterized by the further step of: determining, in response to the temperature calculated during said step of operating said calculating means, the input power value required to bring the body (2) to a selected temperature, displaying the determined input power value to an operator, and performing said step of supplying a selected heater input value in response to the displayed input power value.

10. A method as defined in claim 9 characterized in that it is carried out in connection with the training of an operator.

11. A simulator for determining the temperature response of a body to input power supplied to a plurality of heater units (8) disposed for heating the body (2), characterized in that it comprises computer means (40-46) having a manual data input device (44) for inputting selected heater input values at the start of each one of a plurality of successive time steps, a first memory unit (40) for storing data representative of the thermal characteristics which determine the relation between the input power supplied to each heater unit and the resulting temperature of the body (2), calculation means (40) connected for calculating the temperature of the body (2) during successive time steps on the basis of the temperature calculated during the previous time step and the heater input values supplied during the present time step, and display and recording means (42,46) connected for displaying and recording the heater input power data and calculated temperature of the body (2) during each time step.

FIG. 1

FIG. 3

FIG. 5

FIG. 2

EP 0 407 007 A2

```
            ┌─────────────────┐
            │  READ IN MODEL  │
            │ PARAMETERS AND  │── 20
            │  INITIAL VALUES │
            │  FROM DATABASE  │
            └─────────────────┘
                     │
                     ▼
            ┌─────────────────┐
            │ READ IN TEMPERATURE │
            │   VALUES FROM   │── 22
            │ PREVIOUS CYCLE  │
            └─────────────────┘
                     │
                     ▼
        ┌────────────────────────────┐
        │ CALCULATE AVERAGE TEMPERATURE │
        │ VALUES AND COEFFICIENTS BASED │── 24
        │ ON AVERAGE TEMPERATURE VALUES │
        └────────────────────────────┘
                     │
                     ▼
          ┌────────────────────┐
          │   OPERATOR INPUT OF │── 26
          │ HEATER INPUT POWER VALUES │
          └────────────────────┘
                     │
                     ▼
               ┌─────────┐
               │  i = 1  │── 28
               └─────────┘
                     │
   34              ┌──────────┐
    └─ │ i = i + 1 │──────────▶│
         └──────────┘           │
                     ▼
        ┌────────────────────────────┐
        │ CALCULATE TEMPERATURE DEPENDENT │
        │ PARAMETER VALUES, TEMPERATURE │
        │ CHANGES AND NEW TEMPERATURE │── 30
        │   VALUES FOR ZONE i     │
        └────────────────────────────┘
                     │
                     ▼
              ◇ ── 32
           N  │ i = N │
              ◇
                 │ Y
                 ▼
        ┌────────────────────┐
        │  STORE AND PRINT OUT │── 34
        │ NEW TEMPERATURE VALUES │
        │ AND POWER INPUT VALUES │
        └────────────────────┘
                 │
                 ▼
        ┌────────────────────┐
        │  START NEW CYCLE    │── 36
        └────────────────────┘
```

FIG. 4